(19)

**Europäisches Patentamt**
**European Patent Office**
**Office européen des brevets**

(11) **EP 4 317 060 A1**

(12) **EUROPEAN PATENT APPLICATION**
published in accordance with Art. 153(4) EPC

(43) Date of publication:
**07.02.2024   Bulletin 2024/06**

(21) Application number: **22780306.1**

(22) Date of filing: **22.03.2022**

(51) International Patent Classification (IPC):
***C01B 25/42*** $^{(2006.01)}$

(52) Cooperative Patent Classification (CPC):
**C01B 25/42**

(86) International application number:
**PCT/JP2022/013146**

(87) International publication number:
**WO 2022/210091 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **31.03.2021   JP 2021060929**

(71) Applicant: **Fujimi Incorporated
Kiyosu-shi, Aichi 452-8502 (JP)**

(72) Inventors:
• **KOBAYAKAWA, Hiroki
Kiyosu-shi, Aichi 452-8502 (JP)**

• **NOMURA, Ryo
Kiyosu-shi, Aichi 452-8502 (JP)**
• **UEMURA, Yasuhide
Kiyosu-shi, Aichi 452-8502 (JP)**
• **MIWA, Naoya
Kiyosu-shi, Aichi 452-8502 (JP)**
• **ASHITAKA, Keiji
Kiyosu-shi, Aichi 452-8502 (JP)**

(74) Representative: **Maiwald GmbH
Elisenhof
Elisenstraße 3
80335 München (DE)**

(54) **PLATE-LIKE TITANIUM PYROPHOSPHATE AND METHOD FOR PRODUCING SAME**

(57)   The present invention enables to provide plate-like titanium pyrophosphate, having both high uniformity in size and specific particle shape, which is expected to be highly useful. The present invention relates to plate-like titanium pyrophosphate having an aspect ratio of 5 or more expressed as a ratio of the in-plane length $D_{PL}50$ of primary particles, at which the cumulative frequency from the smaller particle size side is 50% in a volume-based cumulative particle size distribution, to the thickness $D_{PT}50$ of primary particles, at which the cumulative frequency from the smaller particle size side is 50% in a volume-based cumulative particle size distribution (the in-plane length $D_{PL}50$ of primary particles/the thickness $D_{PT}50$ of primary particles), wherein the relationship among the particle size D10 of secondary particles, at which the cumulative frequency from the smaller particle size side is 10% in a volume-based cumulative particle size distribution, the particle size D50 of secondary particles, at which the cumulative frequency from the smaller particle size side is 50% in a volume-based cumulative particle size distribution, and the particle size D90 of secondary particles, at which the cumulative frequency from the smaller particle size side is 90% in a volume-based cumulative particle size distribution, satisfies a specific relationship; and a method for producing the same.

Fig 3

EP 4 317 060 A1

**Description**

**TECHNICAL FIELD**

The present invention relates to plate-like titanium pyrophosphate and a method for producing the same.

**BACKGROUND ART**

Titanium phosphate has two forms of crystalline titanium phosphate and amorphous titanium phosphate. The crystalline titanium phosphate generally has a layered structure, and its application to inorganic ion exchangers, catalysts and the like has been investigated. The crystalline titanium phosphate is known to have several hydrates. It is also known that titanium pyrophosphate can be used for the same applications as crystalline titanium phosphate.

Regarding crystalline titanium phosphate and titanium pyrophosphate, Japanese Patent Laid-Open No. Hei 01-119507 discloses a method for producing an insoluble layered titanium phosphate, and discloses that titanium pyrophosphate is produced by a method similar to the method for producing an insoluble layered titanium phosphate except that reaction conditions are changed. Japanese Patent Laid-Open No. 2000-007311 discloses a method for producing a twinned particles of crystalline titanium phosphate and a method for producing titanium pyrophosphate using the twinned particles as a raw material.

**SUMMARY OF INVENTION**

The crystalline titanium phosphate described in Japanese Patent Laid-Open No. Hei 01-119507 and Japanese Patent Laid-Open No. 2000-007311 is expected to be used in various applications due to its excellent properties, but since there is water of crystallization, a problem of the crystalline titanium phosphate is that sufficient properties cannot be achieved in applications in which the absence of water is desired.

Crystalline titanium phosphate and titanium pyrophosphate also have applications in which a specific particle shape is desired. However, the method for producing titanium pyrophosphate described in Japanese Patent Laid-Open No. Hei 01-119507 does not use titanium phosphate with a specific particle shape as a raw material, and it is therefore difficult to produce titanium pyrophosphate with a desired particle shape. The method for producing titanium pyrophosphate described in Japanese Patent Laid-Open No. 2000-007311 produces titanium pyrophosphate using titanium phosphate with a pseudo-spherical particle shape as a raw material, and it is therefore difficult to produce titanium pyrophosphate with a particle shape other than a spherical or pseudo-spherical shape. In addition, the methods for producing titanium pyrophosphate described in Japanese Patent Laid-Open No. Hei 01-119507 and Japanese Patent Laid-Open No. 2000-007311 may not be able to produce titanium pyrophosphate with high uniformity in size. Thus, a problem of the methods for producing titanium pyrophosphate described in Japanese Patent Laid-Open No. Hei 01-119507 and Japanese Patent Laid-Open No. 2000-007311 is that it may not be able to produce titanium pyrophosphate having high uniformity in size and a specific particle shape.

Accordingly, an object of the present invention is to provide plate-like titanium pyrophosphate, having both high uniformity in size and specific particle shape, which is expected to be highly useful.

The above problems can be solved by the following means :

plate-like titanium pyrophosphate having an aspect ratio of 5 or more expressed as a ratio of the in-plane length $D_{PL}50$ of primary particles, at which the cumulative frequency from the smaller particle size side is 50% in a volume-based cumulative particle size distribution, to the thickness $D_{PT}50$ of primary particles, at which the cumulative frequency from the smaller particle size side is 50% in a volume-based cumulative particle size distribution (the in-plane length $D_{PL}50$ of primary particles/the thickness $D_{PT}50$ of primary particles),
wherein the relationship among the particle size D10 of secondary particles, at which the cumulative frequency from the smaller particle size side is 10% in a volume-based cumulative particle size distribution, the particle size D50 of secondary particles, at which the cumulative frequency from the smaller particle size side is 50% in a volume-based cumulative particle size distribution, and the particle size D90 of secondary particles, at which the cumulative frequency from the smaller particle size side is 90% in a volume-based cumulative particle size distribution, is expressed by the following expression (1).

[Expression 1]

$$\text{(Particle size D90 of secondary particles - Particle}$$
$$\text{size D10 of secondary particles)/Particle size D50 of}$$
$$\text{secondary particles} \leq 1.65$$
$$(1)$$

The above problems can be also solved by the following means:
A method for producing plate-like titanium pyrophosphate, including:

a precursor production step of producing plate-like titanium phosphate, which is a precursor, by hydrothermal synthesis;
a precursor drying step of drying the plate-like titanium phosphate by a means capable of drying while suppressing aggregation; and
a heat treatment step of, after the precursor drying step, heat-treating the plate-like titanium phosphate above 700°C.

**BRIEF DESCRIPTION OF DRAWINGS**

[Figure 1] Figure 1 is a graph showing a spectrum of the particles of Example 1, a spectrum of the particles of Comparative Example 1, a spectrum of the plate-like titanium phosphate obtained by the precursor production in the Examples and Comparative Examples, reference data for titanium pyrophosphate crystals (reference chart), and reference data for titanium phosphate crystals (reference chart) in XRD measurement.
[Figure 2] Figure 2 is a graph showing the measurement results for the particle size distribution of the particles of Example 1 and the particles of Comparative Example 2.
[Figure 3] Figure 3 is a SEM image of the particles of Example 1 by which the state of unevenness in the surfaces (such as the presence or absence of unevenness) can be confirmed.
[Figure 4] Figure 4 is a SEM image of the particles of comparative Example 1 by which the state of unevenness in the surfaces (such as the presence or absence of unevenness) can be confirmed.

**DESCRIPTION OF EMBODIMENTS**

Embodiments of the present invention will be described below. However, the present invention is not limited only to the following embodiments.
In the present specification, unless otherwise specified, operations and measurements of physical properties will be performed under a condition of room temperature (in the range of 20°C or more and 25°C or less).

<Plate-like titanium pyrophosphate>

One aspect of the present invention relates to plate-like titanium pyrophosphate (plate-like titanium pyrophosphate particles, powder composed of plate-like titanium pyrophosphate particles) having an aspect ratio of 5 or more expressed as a ratio of the in-plane length $D_{PL}50$ of primary particles, at which the cumulative frequency from the smaller particle size side is 50% in a volume-based cumulative particle size distribution, to the thickness $D_{PT}50$ of primary particles, at which the cumulative frequency from the smaller particle size side is 50% in a volume-based cumulative particle size distribution (the in-plane length $D_{PL}50$ of primary particles/the thickness $D_{PT}50$ of primary particles),
[0013] wherein the relationship among the particle size D10 of secondary particles, at which the cumulative frequency from the smaller particle size side is 10% in a volume-based cumulative particle size distribution, the particle size D50 of secondary particles, at which the cumulative frequency from the smaller particle size side is 50% in a volume-based cumulative particle size distribution, and the particle size D90 of secondary particles, at which the cumulative frequency from the smaller particle size side is 90% in a volume-based cumulative particle size distribution, is expressed by the following expression (1). The present aspect can provide plate-like titanium pyrophosphate, having both high uniformity in size and specific particle shape, which is expected to be highly useful.
[Expression 2]

(Particle size D90 of secondary particles - Particle size D10 of secondary particles)/Particle size D50 of secondary particles ≤ 1.65.

(1)

The present inventors presume that the mechanism by which the present invention can solve the above problems is as follows.

The plate-like titanium pyrophosphate according to the present invention has an aspect ratio of 5 or more expressed as a ratio of the in-plane length $D_{PL}50$ of primary particles/the thickness $D_{PT}50$ of primary particles (also simply referred herein to as "aspect ratio") . That is, since one particle has large flat surfaces, the properties derived from titanium pyrophosphate can be imparted more efficiently when the plate-like titanium pyrophosphate is added to the object, particularly in applications where plate-like particles are advantageous. In addition, the plate-like titanium pyrophosphate according to the present invention has a narrow particle size distribution, a particle shape having an aspect ratio of 5 or more expressed as a ratio of the in-plane length $D_{PL}50$ of primary particles/the thickness $D_{PT}50$ of primary particles, and uniform particle size, so that orientation improves. For these reasons, the properties derived from the titanium pyrophosphate can be imparted to the object more efficiently.

The above mechanism is based on the presumption, and the technical scope of the present invention is not affected by whether it is correct or incorrect. Similarly, the technical scope of the present invention is not affected by whether the other presumptions in the present specification are correct or incorrect.

Titanium pyrophosphate is represented by the chemical formula: $TiP_2O_7$. In one embodiment of the present invention, plate-like titanium pyrophosphate is preferably plate-like crystalline titanium pyrophosphate (plate-like crystalline titanium pyrophosphate particles, powder composed of plate-like crystalline titanium pyrophosphate particles). Whether the particulate substance is titanium pyrophosphate can be evaluated by X-ray diffraction (X-ray diffraction, XRD) measurement. The details of the measurement method will be described in Examples.

The plate-like titanium pyrophosphate according to one embodiment of the present invention does not contain water of crystallization unlike crystalline titanium phosphate. Hence, when the plate-like titanium pyrophosphate is kneaded into a matrix (base material) such as a resin material or rubber material, it causes no deterioration of the matrix due to detachment of water of crystallization and causes no defects due to volatilization of water of crystallization at an interface with the matrix. Therefore, applications such as a filler are particularly suitable, from the viewpoint that it is expected to be highly useful.

The particle shape (the particle shape of primary particles) of the plate-like titanium pyrophosphate can be evaluated by using a scanning electron microscope (SEM) (SU8000, manufactured by Hitachi High-Tech Corporation) and visually confirming the obtained SEM image. The details of the measurement method will be described in Examples.

For example, when the particle shape is disk-like (when the shape of the plate is not a perfect circle shape, for example, the case of an oval shape or a constricted gourd shape is included.) and when the particle shape is a polygonal plate-like shape (such as a hexagonal plate-like shape or other polygonal shapes), the particle shape is determined to be plate-like.

The in-plane length $D_{PL}50$ of primary particles of the plate-like titanium pyrophosphate, at which the cumulative frequency from the smaller particle size side is 50% in a volume-based cumulative particle size distribution, is not particularly limited. However, the in-plane length $D_{PL}50$ of primary particles of the plate-like titanium pyrophosphate is preferably 0.1 μm or more, more preferably 0.5 μm or more, even more preferably 1 μm or more, and particularly preferably 3 μm or more. When the in-plane length $D_{PL}50$ of primary particles is within these ranges, the usefulness of the plate-like titanium pyrophosphate is enhanced. The in-plane length $D_{PL}50$ of primary particles of the plate-like titanium pyrophosphate is preferably 15 μm or less, more preferably 10 μm or less, even more preferably 7 μm or less, and particularly preferably 4 μm or less. When the in-plane length $D_{PL}50$ of primary particles is within these ranges, production efficiency is further improved. Examples of the preferred range of the in-plane length $D_{PL}50$ of primary particles of the plate-like titanium pyrophosphate include, but are not limited to, 0.1 μm or more and 15 μm or less, 0.5 μm or more and 10 μm or less, 1 μm or more and 7 μm or less, and 3 μm or more and 4 μm or less.

The thickness $D_{PT}50$ of primary particles of the plate-like titanium pyrophosphate, at which the cumulative frequency from the smaller particle size side is 50% in a volume-based cumulative particle size distribution, is not particularly limited. However, the thickness $D_{PT}50$ of primary particles of the plate-like titanium pyrophosphate is preferably 0.01 μm or more, more preferably 0.05 μm or more, and even more preferably 0.1 μm or more. When the thickness $D_{PT}50$ of primary particles is within these ranges, productivity is improved. The thickness $D_{PT}50$ of primary particles of the plate-like titanium pyrophosphate is preferably 3 μm or less, more preferably 2 μm or less, and even more preferably 1.4 μm or less. When the thickness $D_{PT}50$ of primary particles is within these ranges, the usefulness of the plate-like titanium pyrophosphate is enhanced. Examples of the preferred range of the thickness $D_{PT}50$ of primary particles of the plate-like titanium pyrophosphate include, but are not limited to, 0.01 $\mu$m or more and 3 $\mu$m or less, 0.05 $\mu$m or more and 2 $\mu$m or less, and 0.1 $\mu$m or more and 1.4 $\mu$m or less.

The in-plane length $D_{PL}50$ of primary particles and the thickness $D_{PT}50$ of primary particles of the plate-like titanium pyrophosphate can be measured and calculated as follows. Plate-like titanium pyrophosphate is subjected to random measurement with a scanning electron microscope (SEM) . Next, for the obtained SEM image, 100 or more (preferably 100 or more and 200 or less) primary particles (plate-like primary particles) were subjected to measurement with an imaging analysis software "Mac-View ver.4" manufactured by Mountech Co., Ltd. to determine the in-plane long diameter ($\mu$m), the in-plane short diameter ($\mu$m), and the thickness ($\mu$m) of each primary particle. The in-plane long diameter ($\mu$m) of each individual primary particle is defined as a length of the long side of the quadrangle having the longest side among the quadrangles (rectangles or squares) circumscribing the primary particle. The in-plane short diameter ($\mu$m) of each individual primary particle is defined as a length of the short side of the quadrangle having the longest side among the quadrangles circumscribing the primary particle. When the quadrangle circumscribing the primary particle is a square, the length of one side is defined as a length of both the long side and the short side. The quadrangle having the longest side is a quadrangle in which the length of one side (long side) is longest among the quadrangles as determined by calculating the quadrangle circumscribing the selected primary particle at each rotation angle with rotation of 360°. When the in-plane long diameter ($\mu$m) and the in-plane short diameter ($\mu$m) of each individual primary particle are determined, the quadrangle circumscribing the primary particle is a quadrangle circumscribing the plate surface of the primary particle. For the in-plane long diameter ($\mu$m) of each individual primary particle, the value at which the cumulative frequency from the smaller particle size side is 50% in a volume-based cumulative particle size distribution is defined as an in-plane length $D_{PL}50$ ($\mu$m) of primary particles. For the thickness ($\mu$m) of each individual primary particle, the value at which the cumulative frequency from the smaller particle size side is 50% in a volume-based cumulative particle size distribution is defined as a thickness $D_{PT}50$ ($\mu$m) of primary particles. The details of the measurement method will be described in Examples.

The in-plane length $D_{PL}50$ of primary particles of the plate-like titanium pyrophosphate can be controlled by conditions for hydrothermal synthesis of plate-like titanium phosphate as a raw material. For example, increasing the in-plane length $D_{PL}50$ of primary particles of the plate-like titanium phosphate as a raw material can increase the in-plane length $D_{PL}50$ of primary particles of the plate-like titanium pyrophosphate.

The thickness $D_{PT}50$ of primary particles of the plate-like titanium pyrophosphate can be controlled by conditions for hydrothermal synthesis of plate-like titanium phosphate as a raw material. For example, increasing the thickness $D_{PT}50$ of primary particles of the plate-like titanium phosphate as a raw material can increase the thickness $D_{PT}50$ of primary particles of the plate-like titanium pyrophosphate.

The plate-like titanium pyrophosphate according to the above aspect of the present invention has an aspect ratio of 5 or more expressed as the ratio of the in-plane length $D_{PL}50$ of primary particles/the thickness $D_{PT}50$ of primary particles. If the aspect ratio of the plate-like titanium pyrophosphate is less than 5, it cannot have usefulness higher than conventional particles. The aspect ratio of the plate-like titanium pyrophosphate is not particularly limited as long as it is 5 or more, but it is preferably 6 or more, more preferably 7 or more, and even more preferably 8 or more. When the aspect ratio of the plate-like titanium pyrophosphate is within these ranges, the usefulness of the plate-like titanium pyrophosphate is enhanced. The aspect ratio of the plate-like titanium pyrophosphate is not particularly limited as long as it is 5 or more, but it is preferably 100 or less, more preferably 50 or less, and even more preferably 10 or less. When the aspect ratio of the plate-like titanium pyrophosphate is within these ranges, production efficiency is further improved. Examples of the preferred range of the aspect ratio of the plate-like titanium pyrophosphate include, but are not limited to, 5 or more and 100 or less, 6 or more and 100 or less, 7 or more and 50 or less, and 8 or more and 10 or less.

When calculating the aspect ratio, the same unit (for example, $\mu$m) is used for the in-plane length $D_{PL}50$ of primary particles and the thickness $D_{PT}50$ of primary particles.

The aspect ratio of the plate-like titanium pyrophosphate can be controlled by controlling the in-plane length $D_{PL}50$ of primary particles of the plate-like titanium pyrophosphate described above or the thickness $D_{PT}50$ of primary particles of the plate-like titanium pyrophosphate described above. The aspect ratio of the plate-like titanium pyrophosphate can be particularly preferably controlled by controlling the in-plane length $D_{PL}50$ of primary particles of the plate-like titanium pyrophosphate described above.

When aspect ratio of the plate-like titanium pyrophosphate is 5 or more, the applications such as a gas barrier filler, a solid lubricating filler or a proton conductive filler are suitable, from the viewpoint that it is expected to be highly useful.

The reason why the plate-like titanium pyrophosphate according to one embodiment of the present invention is expected to be highly useful as a gas barrier filler is presumed as follows. The plate-like titanium pyrophosphate according to one embodiment of the present invention is dispersed in a matrix such as a resin material or a rubber material so as to be orientated in a direction perpendicular to the gas permeation direction. The gas molecules must bypass the plate-like titanium pyrophosphate, due to a large aspect ratio of the plate-like titanium pyrophosphate. At this time, a so-called labyrinth effect occurs in which the path of gas molecules trying to permeate through the matrix becomes longer and more complicated. As a result, the permeation of gas molecules through the matrix is inhibited, and excellent gas barrier properties can be provided. Specific examples of the application of the plate-like titanium pyrophosphate according to one embodiment of the present invention as a gas barrier filler include, but are not limited to, additives for sealants in which volatilization of moisture and solvents is undesirable, such as food packages and electrolytic capacitors.

The reason why the plate-like titanium pyrophosphate according to one embodiment of the present invention is expected to be highly useful as a solid lubricating filler is presumed as follows. The plate-like titanium pyrophosphate according to one embodiment of the present invention is dispersed in a resin coating that requires lubricity so as to be orientated in the same direction as the sliding direction. At this time, the resin coating easily forms a smooth surface due to a large aspect ratio of the plate-like titanium pyrophosphate. As a result, the large roughness of these surfaces is reduced and the frictional force is reduced, so that a resin coating having excellent lubricity can be obtained. Alternatively, the plate-like titanium pyrophosphate according to one embodiment of the present invention is dispersed in a grease or oil that requires lubricity. At this time, the particles are easily orientated and drawn between the sliding members due to a large aspect ratio of the plate-like titanium pyrophosphate. As a result, the frequency of direct contact between the sliding members is further reduced, and the effect of suppressing damage such as seizing is further enhanced compared to lubrication with only an oil or grease.

The reason why the plate-like titanium pyrophosphate according to one embodiment of the present invention is expected to be highly useful as a proton conductive filler is presumed as follows. For example, as an electrolyte material for fuel cells, a composite electrolyte of a material such as zinc phosphate glass and titanium pyrophosphate particles are known, and protons are conducted in a nanoscale layer formed at an interface between them. The plate-like titanium pyrophosphate according to one embodiment of the present invention is orientated in a proton conducting direction. At this time, the proton conduction paths are more easily connected due to a large aspect ratio of the plate-like titanium pyrophosphate according to one embodiment of the present invention. As a result, a solid electrolyte for fuel cells exhibiting high proton conductivity can be obtained.

For the plate-like titanium pyrophosphate, when, for the in-plane short diameter of each individual primary particle, the value at which the cumulative frequency from the smaller particle size side is 50% in a volume-based cumulative particle size distribution is defined as a short diameter $D_{PS}50$ of primary particles, the calculated ratio of the in-plane length $D_{PL}50$ of primary particles to the short diameter $D_{PS}50$ of primary particles (the in-plane length $D_{PL}50$ of primary particles/the short diameter $D_{PS}50$ of primary particles) is not particularly limited. However, the ratio of the in-plane length $D_{PL}50$ of primary particles to the short diameter $D_{PS}50$ of primary particles (the in-plane length $D_{PL}50$ of primary particles/the short diameter $D_{PS}50$ of primary particles) is preferably 1 or more. The ratio of the in-plane length $D_{PL}50$ of primary particles to the short diameter $D_{PS}50$ of primary particles (the in-plane length $D_{PL}50$ of primary particles/the short diameter $D_{PS}50$ of primary particles) is preferably 5 or less. The method for measuring the in-plane short diameter of each individual primary particle is the same as those described for the above methods for measuring and calculating the in-plane length $D_{PL}50$ of primary particles and the thickness $D_{PT}50$ of primary particles.

When calculating the value of the in-plane length $D_{PL}50$ of primary particles/the short diameter $D_{PS}50$ of primary particles, the same unit (for example, $\mu$m) is used for the in-plane length $D_{PL}50$ of primary particles and the short diameter $D_{PS}50$ of primary particles.

For the plate-like titanium pyrophosphate according to the above aspect of the present invention, the relationship among the particle size D10 of secondary particles, at which the cumulative frequency from the smaller particle size side is 10% in a volume-based cumulative particle size distribution, the particle size D50 of secondary particles, at which the cumulative frequency from the smaller particle size side is 50% in a volume-based cumulative particle size distribution, and the particle size D90 of secondary particles, at which the cumulative frequency from the smaller particle size side is 90% in a volume-based cumulative particle size distribution, is expressed by the following expression (1).

[Expression 3]

$$\text{(Particle size D90 of secondary particles} - \text{Particle size D10 of secondary particles)/Particle size D50 of secondary particles} \leq 1.65. \quad (1)$$

The smaller the calculated value of the expression (1) (particle size D90 of secondary particles - particle size D10 of secondary particles)/particle size D50 of secondary particles (also simply referred herein to as "value of the expression (1)") for the plate-like titanium pyrophosphate represents the narrower particle size distribution. If the value of the expression (1) for the plate-like titanium pyrophosphate is more than 1.65, it will be broadened in the particle size distribution and it will not be able to achieve usefulness higher than conventional particles. The value of the expression (1) for the plate-like titanium pyrophosphate is not particularly limited as long as it is 1.65 or less, but it is preferably 1.6 or less, more preferably 1.5 or less, and even more preferably 1.4 or less. When the value of the expression (1) is within these ranges, the usefulness of the plate-like titanium pyrophosphate is enhanced. Also, the value of the expression (1) for the plate-like titanium pyrophosphate can be, but not particularly limited to, for example, more than 0. Examples of the preferred range of the value of the expression (1) for the plate-like titanium pyrophosphate include, but are not limited to, more than 0 and 1.65 or less, more than 0 and 1.6 or less, more than 0 and 1.5 or less, and more than 0 and 1.4 or less.

When calculating the value of the expression (1), the same unit (for example, $\mu$m) is used for the particle size D10 of secondary particles, the particle size D5 of secondary particles, and the particle size D90 of secondary particles.

The particle size of secondary particles D50 of the plate-like titanium pyrophosphate is not particularly limited. However, the particle size D50 of secondary particles of the plate-like titanium pyrophosphate is preferably 0.1 $\mu$m or more, more preferably 0.5 $\mu$m or more, even more preferably 1 $\mu$m or more, and particularly preferably 3 $\mu$m or more. When the particle size D50 of secondary particles of the plate-like titanium pyrophosphate is within these ranges, the usefulness of the plate-like titanium pyrophosphate is enhanced. The particle size D50 of secondary particles of the plate-like titanium pyrophosphate is not particularly limited, but preferably 15 $\mu$m or less, more preferably 10 $\mu$m or less, even more preferably 7 $\mu$m or less, and particularly preferably 4 $\mu$m or less. When the particle size D50 of secondary particles of the plate-like titanium pyrophosphate is within these ranges, production efficiency is further improved. Examples of the preferred range of the particle size D50 of secondary particles of the plate-like titanium pyrophosphate include, but are not limited to, 0.1 $\mu$m or more and 15 $\mu$m or less, 0.5 $\mu$m or more and 10 $\mu$m or less, 1 $\mu$m or more and 7 $\mu$m or less, and 3 $\mu$m or more and 4 $\mu$m or less.

Each of the particle size D10 of secondary particles, the particle size D50 of secondary particles and the particle size D90 of secondary particles of the plate-like titanium pyrophosphate can be measured using a particle size distribution measurement device LA-950 (manufactured by HORIBA, Ltd.). The details of the measurement method will be described in Examples.

The particle size D50 of secondary particles of the plate-like titanium pyrophosphate can be controlled by a condition for hydrothermal synthesis of plate-like titanium phosphate as a raw material or the drying process and drying temperature in the precursor drying step during the production. For example, increasing the particle size D50 of secondary particles of the plate-like titanium phosphate as a raw material can increase the particle size D50 of secondary particles of the plate-like titanium pyrophosphate. On the other hand, for example, the use of flash drying or freeze drying as the drying process in the precursor drying step during the production can reduce the particle size D50 of secondary particles of the plate-like titanium pyrophosphate.

The value of the expression (1) for the plate-like titanium pyrophosphate can be controlled by the value of the general expression (1) for the plate-like titanium phosphate as a raw material or the drying process and drying temperature in the precursor drying step during the production. For example, reducing the value of the general expression (1) for plate-like titanium phosphate as a raw material can reduce the value of the expression (1) for plate-like titanium pyrophosphate. On the other hand, for example, the use of flash drying or freeze drying as the drying process in the precursor drying step during the production can reduce the value of the expression (1) for the plate-like titanium pyrophosphate.

When the value of the expression (1) for the plate-like titanium pyrophosphate is satisfied, it is particularly suitable for such an application as a filler with orientation, from the viewpoint that it is expected to be highly useful. Orientation of particles is generally caused by shear force applied to the particles, contraction force of a matrix holding the particles, and the like. When the particle size distribution is narrow, it is easier for the particles to be orientated in one direction, and more particles will be orientated in one direction. One example of the method for dispersing particles having an anisotropic shape in a film includes a method comprising: extruding, through a T-die, a thermoplastic resin which has the particles dispersed therein and is melted; rolling it with rolls for dimensional control; and simultaneously orientating the particles in the thermoplastic resin. For example, in the case of plate-like particles, particles large in the in-plane length tend to be easily orientated, whereas particles short in the in-plane length tend to be difficult to be orientated. Therefore, when the particle size distribution is narrow, many particles can be easily orientated uniformly. As a result, the effect obtained by the particles having an anisotropic shape is exhibited more satisfactorily. From these, when the value of the expression (1) for the plate-like titanium pyrophosphate is satisfied, the usefulness of the plate-like titanium pyrophosphate having an aspect ratio of 5 or more is further improved.

The ratio of the particle size D50 of secondary particles to the in-plane length $D_{PL}50$ of primary particles of the plate-like titanium pyrophosphate (the particle size D50 of secondary particles/the in-plane length $D_{PL}50$ of primary particles) is, but not particularly limited to, preferably as close to 1 as possible. The value of the ratio close to 1 is preferred, because the plate-like titanium pyrophosphate is dispersed in a state closer to that of primary particles. For example, the value of the ratio may be 1 or more, or may be more than 1. Also, the value of the ratio is preferably less than 10, more preferably less than 5, and even more preferably less than 3. The method for measuring each of the in-plane length $D_{PL}50$ of primary particles and the particle size D50 of secondary particles of the plate-like titanium pyrophosphate is the same as described above. Examples of the preferred range of the particle size D50 of secondary particles/the in-plane length $D_{PL}50$ of primary particles of the plate-like titanium pyrophosphate include, but are not limited to, 1 or more and less than 10, more than 1 and less than 5, and more than 1 and less than 3.

When calculating the value of the particle size D50 of secondary particles/the in-plane length $D_{PL}50$ of primary particles, the same unit (for example, $\mu$m) is used for the in-plane length $D_{PL}50$ of primary particles and the particle size D50 of secondary particles.

The plate-like titanium pyrophosphate according to one embodiment of the present invention preferably has an unevenness shape in the surface. That is, the plate-like titanium pyrophosphate preferably has unevenness in its particle surface (the surfaces of primary particles). The unevenness may be holes.

The presence or absence of an unevenness shape in the surface of the plate-like titanium pyrophosphate can be evaluated by using a scanning electron microscope (SEM) (SU8000, manufactured by Hitachi High-Tech Corporation) and visually confirming the obtained SEM image. The details of the measurement method will be described in Examples.

If the plate-like titanium pyrophosphate has an unevenness shape in the surface, it is presumed to be improved in its usefulness. This is presumed to be due to the increased surface area of the particles. For example, when the plate-like titanium pyrophosphate is used as a proton conductor in an electrolyte material of fuel cells, proton conduction occurs at an interface between the surface of the plate-like titanium pyrophosphate and the surrounding matrix. At this time, if the plate-like titanium pyrophosphate has an unevenness shape in the surface, it can hold more protons on the surface, and it is presumed to contribute to the therefore improvement of the proton conductivity. From the viewpoint of optical properties, if the plate-like titanium pyrophosphate has an unevenness shape in the surface, it is presumed to be improved in the light scattering effect for incident light. For example, when the plate-like titanium pyrophosphate is used as a coating agent for inks, or an additive for cosmetics, or the like, it is presumed to be able to impart haze to a coating film of inks, cosmetics, or the like. If the plate-like titanium pyrophosphate has an unevenness shape in the surface, it is improved in adsorption of organic substances and is therefore presumed to be able to be used as an additive for chemical fibers. However, the applications of the plate-like titanium pyrophosphate having an unevenness shape in the surface are not limited to the above applications.

The plate-like titanium pyrophosphate is, but not particularly limited to, preferably a plate-like titanium pyrophosphate having the relationship between the specific surface area S and the in-plane length $D_{PL}50$ of primary particles is expressed by the following expression (2).

[Expression 4]

$$\text{Specific surface area S (m}^2\text{/g)} \times \text{In-plane length } D_{PL}50$$
$$(\mu\text{m}) \text{ of primary particles} \geq 9 \ (\mu\text{m·m}^2\text{/g})$$
$$(2)$$

In the above expression (2) for the plate-like titanium pyrophosphate, the calculated value ($\mu$m·m$^2$/g) of the specific surface area S (m$^2$/g) $\times$ the in-plane length $D_{PL}50$ ($\mu$m) of primary particles (also simply referred herein to as "the value of the expression (2)") is an index of the degree of unevenness in the particle surface (the surfaces of primary particles). When the value of the above expression (2) for the plate-like titanium pyrophosphate increases, the unevenness shape of the particle surface (the surfaces of primary particles) can easily be confirmed and the degree of unevenness increases. The value of the above expression (2) for the plate-like titanium pyrophosphate is more preferably 15 $\mu$m·m$^2$/g or more and even more preferably 17 $\mu$m·m$^2$/g or more. The value of the above expression (2) for the plate-like titanium pyrophosphate is preferably 150 $\mu$m·m$^2$/g or less, from the viewpoint of handling of the (particles) powder. Examples of the preferred range of the value of the above expression (2) for the plate-like titanium pyrophosphate include, but are not limited to, 9 $\mu$m·m$^2$/g or more and 150 $\mu$m·m$^2$/g or less, 15 $\mu$m·m$^2$/g or more and 150 $\mu$m·m$^2$/g or less, and 17 $\mu$m·m$^2$/g or more and 150 $\mu$m·m$^2$/g or less.

The in-plane length $D_{PL}50$ ($\mu$m) of primary particles of the plate-like titanium pyrophosphate can be measured and calculated by the above method. The specific surface area of the plate-like titanium pyrophosphate can be measured by the BET specific surface area method. The details of the method for measuring the specific surface area of the plate-like titanium pyrophosphate will be described in Examples.

The coefficient of static friction of the plate-like titanium pyrophosphate is not particularly limited, but it is preferably low from the viewpoint of lubricity, for example, from the viewpoint of preventing damage to machinery due to wear and seizing. The coefficient of static friction of the plate-like titanium pyrophosphate is preferably 0.80 or less, more preferably 0.75 or less, and even more preferably 0.70 or less. The coefficient of static friction of the plate-like titanium pyrophosphate is preferably 0.30 or more, from the viewpoint of tactile sensation, for example, from the viewpoint of tactile sensation in applications such as cosmetic applications where tactile sensation is considered as important. Examples of the preferred range of the coefficient of static friction of the plate-like titanium pyrophosphate include, but are not limited to, 0.30 or more and 0.80 or less, 0.30 or more and 0.75 or less, and 0.30 or more and 0.70 or less.

The coefficient of static friction of the plate-like titanium pyrophosphate can be measured by performing a reciprocating sliding test. The details of the measurement method will be described in Examples.

The adsorption amount (mg) of methylene blue per 1 g of the plate-like titanium pyrophosphate is not particularly limited, but is preferably large from the viewpoint of deodorizing properties. The adsorption amount (mg) of methylene blue per 1 g of the plate-like titanium pyrophosphate is, but not limited to, preferably 1.0 mg or more, more preferably 4.0 mg or more, and even more preferably 7.0 mg or more.

The details of the method for measuring the adsorption amount (mg) of methylene blue per 1 g of the plate-like titanium pyrophosphate will be described in Examples.

The lower concentration of impurities in the plate-like titanium pyrophosphate is more preferred. The concentration of impurities is preferably less than 5% by mass, more preferably less than 1% by mass, and even more preferably less than 100 ppm by mass, relative to the total mass of the plate-like titanium pyrophosphate. Also, the concentration of impurities is not particularly limited, and may be, for example, 1 ppm by mass or more.

<Method for producing plate-like titanium pyrophosphate>

The method for producing the plate-like titanium pyrophosphate is not particularly limited, as long as it is a method by which the plate-like titanium pyrophosphate can be produced.

Another aspect of the present invention relates to a method for producing plate-like titanium pyrophosphate (plate-like titanium pyrophosphate particles, powder composed of plate-like titanium pyrophosphate particles), including: a precursor production step of producing plate-like titanium phosphate, which is a precursor, by hydrothermal synthesis; a precursor drying step of drying the plate-like titanium phosphate by a means capable of drying while suppressing aggregation; and a heat treatment step of, after the precursor drying step, heat-treating the plate-like titanium phosphate above 700°C. The present aspect can provide plate-like titanium pyrophosphate, having both high uniformity in size and specific particle shape, which is expected to be highly useful.

According to the production method according to the present aspect, the following plate-like titanium pyrophosphate can be produced successfully:

plate-like titanium pyrophosphate having an aspect ratio of 5 or more expressed as a ratio of the in-plane length $D_{PL}50$ of primary particles, at which the cumulative frequency from the smaller particle size side is 50% in a volume-based cumulative particle size distribution, to the thickness $D_{PT}50$ of primary particles, at which the cumulative frequency from the smaller particle size side is 50% in a volume-based cumulative particle size distribution (the in-plane length $D_{PL}50$ of primary particles/the thickness $D_{PT}50$ of primary particles);

wherein the relationship among the particle size D10 of secondary particles, at which the cumulative frequency from the smaller particle size side is 10% in a volume-based cumulative particle size distribution, the particle size D50 of secondary particles, at which the cumulative frequency from the smaller particle size side is 50% in a volume-based cumulative particle size distribution, and the particle size D90 of secondary particles, at which the cumulative frequency from the smaller particle size side is 90% in a volume-based cumulative particle size distribution, is expressed by the following expression (1).

[Expression 5]

$$(\text{Particle size D90 of secondary particles} - \text{Particle size D10 of secondary particles})/\text{Particle size D50 of secondary particles} \leq 1.65. \tag{1}$$

From the above, it can be described that the production method according to the present aspect is a preferred production method of the above plate-like titanium pyrophosphate. The details of the plate-like titanium pyrophosphate produced by the production method according to one embodiment of the present invention are as described above.

When producing titanium pyrophosphate using titanium phosphate as a raw material, the titanium phosphate is generally subjected to drying treatment and heat treatment. The present inventors have investigated the use of plate-like titanium phosphate as a raw material for producing plate-like titanium pyrophosphate, but they have found that when subjecting the plate-like titanium phosphate to drying treatment or heat treatment, its plate-like structure may be collapsed. They have also found that when using plate-like titanium phosphate as a raw material for producing plate-like titanium pyrophosphate, coarse particles are liable to be formed.

In the production method according to the present aspect, the plate-like titanium phosphate is subjected to drying treatment by a means capable of drying while suppressing aggregation. In contrast, in the conventional drying treatment, when the titanium phosphate used as a raw material is plate-like, the contact area between particles of titanium phosphate is large, and it is therefore presumed that the particles may be liable to adhere with each other during heat treatment to form coarse particles. However, by subjecting the titanium phosphate to drying treatment using a means capable of drying while suppressing aggregation, it is presumed that the formation of coarse particles is suppressed and the plate-like titanium pyrophosphate, having a narrow particle size distribution, satisfying the relationship expressed by the above expression (1) is produced successfully. In addition, in the production method according to the present invention, a predetermined temperature is adopted as a heat treatment temperature of the plate-like titanium phosphate after the drying treatment. It is presumed that as a result, the production of the plate-like titanium pyrophosphate can be more proceeded while maintaining the plate-like particle shape derived from the plate-like titanium phosphate to successfully produce the plate-like titanium pyrophosphate having an aspect ratio of 5 or more expressed as a ratio of the in-plane length $D_{PL}50$ of primary particles/the thickness $D_{PT}50$ of primary particles.

[Precursor synthesis step]

The production method according to the above aspect of the present invention includes a precursor production step of producing plate-like titanium phosphate, which is a precursor(plate-like titanium phosphate particles), by hydrothermal synthesis.

Hydrothermal synthesis is a method for synthesizing a substance and growing a crystal in the presence of water at a high temperature, particularly water at a high temperature and a high pressure.

Titanium phosphate is represented by the chemical formula $Ti(HPO_4)_2 \cdot nH_2O$ (n is an integer of 0 or more), and it is also referred to titanium bis (hydrogen phosphate) . Here, n is not particularly limited, but is preferably an integer of 0 or more and 2 or less, and more preferably an integer of 0 or more and 1 or less. In one embodiment of the present invention, the plate-like titanium phosphate is preferably plate-like crystalline titanium phosphate.

The hydrothermal synthesis is not particularly limited, as long as it is a method in which a raw material containing titanium and phosphorus is allowed to react by hydrothermal synthesis. The method of hydrothermal synthesis used may be any known method, and a preferred example thereof includes a method described in International Publication No. WO 2018/180797.

The raw material containing titanium and phosphorus which is a raw material for the plate-like titanium phosphate are not particularly limited, and may be a compound containing titanium and phosphorus or a mixture of a compound containing titanium and a compound containing phosphorus. The compound containing titanium and phosphorus, and a compound containing titanium and a compound containing phosphorus may each be used alone or in combination of two or more. Among these, a preferred example of the raw material for plate-like titanium phosphate includes a mixture of titanium (IV) sulfate ($Ti(SO_4)_2$) or titanyl sulfate ($TiOSO_4$) and phosphoric acid ($H_3PO_4$). By using titanium sulfate or titanyl sulfate as a titanium source, the plate-like titanium phosphate can be produced more efficiently. Among these, titanyl sulfate is more preferred as a titanium source.

The ratio of the molar concentration of phosphorus [P] to the molar concentration of titanium [Ti], [P]/[Ti] in a raw material for the plate-like titanium phosphate is not particularly limited, but is preferably 3 or more and more preferably 5 or more. Also, the [P]/[Ti] is not particularly limited, but is preferably 21 or less. When the [P]/[Ti] is within these ranges, the plate-like titanium phosphate can be produced more efficiently. Examples of the preferred range of the [P]/[Ti] include, but are not limited to, 3 or more and 21 or less, and 5 or more and 21 or less.

The molar concentration of titanium in a raw material for the plate-like titanium phosphate is not particularly limited, but is preferably 0.05 mol/L or more and more preferably 0.2 mol/L or more. Also, the molar concentration of titanium in a raw material for the plate-like titanium phosphate is not particularly limited, but is preferably 1 mol/L or less and more preferably 0.6 mol/L or less. When the molar concentration of titanium is within these ranges, the plate-like titanium phosphate can be produced more efficiently.

The molar concentrations of titanium and phosphorus in a raw material for the plate-like titanium phosphate can be each confirmed by calculating from the amounts added.

The reaction temperature in hydrothermal synthesis is not particularly limited, but is preferably 100°C or more and more preferably 110°C or more. When the reaction temperature is within these ranges, the plate-like titanium phosphate can be produced more efficiently. Also, the reaction temperature in hydrothermal synthesis is not particularly limited, but is preferably 160°C or less. When the reaction temperature is within this range, the production by general-purpose equipment is possible and productivity is further improved. Examples of the preferred range of the reaction temperature in hydrothermal synthesis include, but are not limited to, 100°C or more and 160°C or less, and 110°C or more and 160°C or less.

The pressure in hydrothermal synthesis is not particularly limited, but is preferably 0.1 MPa or more. When the pressure is within this range, the plate-like titanium phosphate can be produced more efficiently. Also, the pressure in hydrothermal synthesis is not particularly limited, but is preferably 1 MPa or less. When the pressure is within this range, the production by general-purpose equipment is possible and productivity is further improved.

The heating time in hydrothermal synthesis is not particularly limited, but is preferably 1 hour or more and more preferably 3 hours or more. When the heating time is within these ranges, the plate-like titanium phosphate can be produced more efficiently. Also, the heating time in hydrothermal synthesis is not particularly limited, but is 12 hours or less and more preferably 6 hours or less. When the heating time is within these ranges, productivity is further improved. Examples of the preferred range of the heating time in hydrothermal synthesis include, but are not limited to, 1 hour or more and 12 hours or less and 3 hours or more and 6 hours or less.

The equipment used for hydrothermal synthesis is not particularly limited, and examples thereof include reaction vessels made of glass-lined materials and autoclaves.

The particle shape (the particle shape of primary particles) of the plate-like titanium phosphate can be evaluated by using a scanning electron microscope (SEM) (SU8000, manufactured by Hitachi High-Tech Corporation) and visually confirming the obtained SEM image, in the same manner as the particle shape of the plate-like titanium pyrophosphate described above. The method for determining the particle shape of the plate-like titanium phosphate is also the same as the method for determining the particle shape of the plate-like titanium pyrophosphate.

For the plate-like titanium phosphate, the in-plane length $D_{PL}50$ of primary particles, at which the cumulative frequency from the smaller particle size side is 50% in a volume-based cumulative particle size distribution, is not particularly limited, but is preferably 0.1 $\mu$m or more, more preferably 0.5 $\mu$m or more, even more preferably 1 $\mu$m or more, and particularly preferably 3 $\mu$m or more. Also, for the plate-like titanium phosphate, the in-plane length $D_{PL}50$ of primary particles of the plate-like titanium phosphate is not particularly limited, but is preferably 15 $\mu$m or less, more preferably 10 $\mu$m or less, even more preferably 7 $\mu$m or less, and particularly preferably 4 $\mu$m or less. When the in-plane length $D_{PL}50$ of primary particles of the plate-like titanium phosphate is within these ranges, production efficiency of the plate-like titanium pyrophosphate is further improved. In one preferred embodiment of the present invention, the in-plane length $D_{PL}50$ of primary particles of the plate-like titanium phosphate is 0.1 $\mu$m or more and 15 $\mu$m or less. Examples of the preferred range of the in-plane length $D_{PL}50$ of primary particles of the plate-like titanium phosphate include, but are not limited to, 0.1 $\mu$m or more and 10 $\mu$m or less, 0.5 $\mu$m or more and 10 $\mu$m or less, 1 $\mu$m or more and 7 $\mu$m or less, and 3 $\mu$m or more and 4 $\mu$m or less.

The thickness $D_{PT}50$ of primary particles of the plate-like titanium phosphate is not particularly limited, but preferably 0.01 $\mu$m or more, and more preferably 0.05 $\mu$m or more. Also, the thickness $D_{PT}50$ of primary particles of the plate-like titanium phosphate is preferably 3 $\mu$m or less and more preferably 2 $\mu$m or less. When $D_{PT}50$ of primary particles of the plate-like titanium is within these ranges, production efficiency of the plate-like titanium pyrophosphate is further improved. Examples of the preferred range of the thickness $D_{PT}50$ of primary particles of the plate-like titanium phosphate include, but are not limited to, 0.01 $\mu$m or more and 3 $\mu$m or less and 0.05 $\mu$m or more and 2 $\mu$m or less.

The aspect ratio expressed by the in-plane length $D_{PL}50$ of primary particles/the thickness $D_{PT}50$ of primary particles of the plate-like titanium phosphate is not particularly limited, but is preferably 5 or more, more preferably 6 or more, even more preferably 7 or more, and particularly preferably 8 or more. Also, the aspect ratio of the plate-like titanium phosphate is not particularly limited, but is preferably 100 or less, more preferably 50 or less, and even more preferably 10 or less. When the aspect ratio of the plate-like titanium phosphate is within these ranges, production efficiency of the plate-like titanium pyrophosphate is further improved. Examples of the preferred range of the aspect ratio of the plate-like titanium phosphate include, but are not limited to, 5 or more and 100 or less, 6 or more and 100 or less, 7 or more and 50 or less and 8 or more and 10 or less.

When calculating the aspect ratio, the same unit (for example, $\mu$m) is used for the in-plane length $D_{PL}50$ of primary particles and the thickness $D_{PT}50$ of primary particles.

For the plate-like titanium phosphate, the relationship among the particle size D10 of secondary particles, at which the cumulative frequency from the smaller particle size side is 10% in a volume-based cumulative particle size distribution, the particle size D50 of secondary particles, at which the cumulative frequency from the smaller particle size side is 50% in a volume-based cumulative particle size distribution, and the particle size D90 of secondary particles, at which the cumulative frequency from the smaller particle size side is 90% in a volume-based cumulative particle size distribution, is not particularly limited. However, for the plate-like titanium phosphate, the calculated value of (D90 of secondary particles - D10 of secondary particles)/the particle size D50 of secondary particles is preferably the upper limit or less of the above expression (1) for the plate-like titanium pyrophosphate produced, that is, 1.65 or less ((D90 of secondary particles - D10 of secondary particles)/the particle size D50 of secondary particles $\leq$ 1.65), more preferably 1.6 or less, and even more preferably 1.5 or less. Also, for the plate-like titanium phosphate, the calculated value of (D90 of secondary particles - D10 of secondary particles)/the particle size D50 of secondary particles is not particularly limited, but may be, for example, more than 0. For the plate-like titanium phosphate, the smaller calculated value of (D90 of secondary particles - D10 of secondary particles)/the particle size D50 of secondary particles represents the narrower particle size distribution of the plate-like titanium phosphate. Examples of the preferred range of the calculated value of (D90 of secondary particles - D10 of secondary particles)/ the particle size D50 of secondary particles of the plate-like titanium phosphate include, but are not limited to, more than 0 and 1.65 or less, more than 0 and 1.6 or less, and more than 0 and 1.5 or less.

When calculating the value of (D90 of secondary particles - D10 of secondary particles)/the particle size D50 of secondary particles, the same unit (for example, $\mu$m) is used for D10 of secondary particles, the particle size D50 of secondary particles and D90 of secondary particles.

The particle size D50 of secondary particles of the plate-like titanium phosphate is not particularly limited, but is preferably 0.1 $\mu$m or more, more preferably 0.5 $\mu$m or more, even more preferably 1 $\mu$m or more, and particularly preferably 3 $\mu$m or more. Also, the particle size D50 of secondary particles of the plate-like titanium phosphate is not particularly limited, but is preferably 15 $\mu$m or less, more preferably 10 $\mu$m or less, even more preferably 7 $\mu$m or less, and particularly preferably 4 $\mu$m or less. When the particle size D50 of secondary particles of the plate-like titanium phosphate is within these ranges, production efficiency of the plate-like titanium pyrophosphate is further improved. Examples of the preferred range of the particle size D50 of secondary particles of the plate-like titanium phosphate include, but are not limited to, 0.1 $\mu$m or more and 15 $\mu$m or less, 0.5 $\mu$m or more and 10 $\mu$m or less, 1 $\mu$m or more and 7 $\mu$m or less, and 3 $\mu$m or more and 4 $\mu$m or less.

For the plate-like titanium phosphate, the method for evaluating each of the in-plane length $D_{PL}50$ of primary particles, the thickness $D_{PT}50$ of primary particles, the particle size D10 of secondary particles, the particle size D50 of secondary particles and the particle size D90 of secondary particles is the same as the method for evaluating each of those for the plate-like titanium pyrophosphate.

In the precursor synthesis step, when the plate-like titanium phosphate is produced in a slurry form, a dispersing medium for a plate-like titanium phosphate slurry (a slurry containing the plate-like titanium phosphate) is not particularly limited. However, the dispersing medium preferably contains water, and it is more preferably water. The dispersing medium may further contain other solvents such as an organic solvent, in addition to water. The content of the plate-like titanium phosphate in the plate-like titanium phosphate slurry is not particularly limited, but is preferably 0.1% by mass or more, and more preferably 1% by mass or more, relative to the total mass of the plate-like titanium phosphate slurry. When the content of the plate-like titanium phosphate in the plate-like titanium phosphate slurry is within these ranges, the plate-like titanium phosphate can be produced more efficiently. Also, the content of the plate-like titanium phosphate in the plate-like titanium phosphate slurry is not particularly limited, but is preferably 50% by mass or less, and more preferably 30% by mass or less, relative to the total mass of the plate-like titanium phosphate slurry. When the content of the plate-like titanium phosphate in the plate-like titanium phosphate slurry is within these ranges, productivity is further improved.

In the precursor synthesis step, when the plate-like titanium phosphate is produced in a slurry form and the plate-like titanium phosphate slurry contains water, the pH of the plate-like titanium phosphate slurry is not particularly limited. However, the pH of the plate-like titanium phosphate slurry is preferably 1 or more and 12 or less, more preferably 4 or more and 10 or less, even more preferably 6 or more and 8 or less, and particularly preferably 7. The pH can be controlled by replacing the solvent in the plate-like titanium phosphate slurry with pure water. The pH of the plate-like titanium phosphate slurry may be further adjusted by adding dropwise ammonia water having a concentration of 29% by mass to the plate-like titanium phosphate slurry. The pH can be measured using a pH meter, and the details of the measurement method will be described in Examples.

[Precursor drying step]

The production method according to the aspect of the present invention includes a precursor drying step of drying plate-like titanium phosphate (plate-like titanium phosphate particles) by a means capable of drying while suppressing aggregation. The fact that the aggregation of the precursor is not allowed to proceed significantly by drying treatment can be confirmed, for example, by observing the change in filterability of the plate-like titanium phosphate between before and after drying treatment, that is, by observing the maintenance of filterability of the plate-like titanium phosphate above a certain level even after drying treatment, compared with before drying treatment.

The plate-like titanium phosphate to be subjected to drying treatment in the precursor drying step is preferably in a slurry form, that is, it is a plate-like titanium phosphate slurry (a slurry containing plate-like titanium phosphate).

The means capable of drying while suppressing aggregation is not particularly limited, but is preferably flash drying or freeze drying and more preferably flash drying, from the viewpoint of producing plate-like titanium pyrophosphate that satisfies the relationship of the above expression (1). Flash drying and freeze drying may be also combined. The means capable of drying while suppressing aggregation is preferably flash drying, freeze drying, or a combination thereof.

Flash drying refers to a drying means by which water-containing powder in a cake from, a slurry form or the like is fed into a flowing air at a temperature above a certain level and at an air velocity above a certain level and dried instantaneously to obtain a dispersed dry powder.

The temperature of the flowing air in flash drying is not particularly limited, but is preferably 150°C or more, more preferably 200°C or more, and even more preferably 220°C or more. If the temperature of the flowing air is too low, the moisture in the water-containing powder may not evaporate sufficiently and aggregation of the plate-like titanium phosphate may proceed. However, when the temperature of the flowing air is within these ranges, the plate-like titanium phosphate dispersed more satisfactorily can be obtained after drying treatment. Also, the temperature of the flowing air in flash drying is not particularly limited, but is preferably 300°C or less, more preferably 270°C or less, and even more preferably 250°C or less. When the temperature of the flowing air is within these ranges, the plate-like titanium phosphate can be further suppressed in decomposition. Examples of the preferred range of the temperature of the flowing air in flash drying include, but are not limited to, 150°C or more and 300°C or less, 200°C or more and 270°C or less, and 220°C or more and 250°C or less.

The air velocity of the flowing air in flash drying is not particularly limited, but is preferably 5 $m^3$/min or more, more preferably 7 $m^3$/min or more, and even more preferably 10 $m^3$/min or more. If the air velocity of the flowing air is too low, the moisture in the water-containing powder may not evaporate sufficiently and aggregation of the plate-like titanium phosphate may proceed. However, when the air velocity of the flowing air is within these ranges, the plate-like titanium phosphate dispersed more satisfactorily can be obtained after drying treatment. Also, the air velocity of the flowing air in flash drying is not particularly limited, but is preferably 15 $m^3$/min or less, more preferably 12 $m^3$/min or less, and even more preferably 10 $m^3$/min or less. When the air velocity of the flowing air is within these ranges, the plate-like titanium phosphate having the moisture evaporated more sufficiently can be obtained. Examples of the preferred range of the air velocity of the flowing air in flash drying include, but are not limited to, 5 $m^3$/min or more and 15 $m^3$/min or less, 7 $m^3$/min or more and 12 $m^3$/min or less, 10 $m^3$/min or more and 12 $m^3$/min or less, and 7 $m^3$/min or more and 10 $m^3$/min or less.

The processing speed in flash drying is not particularly limited, but is preferably 5 kg/hour or more, more preferably 10 kg/hour or more, and even more preferably 20 kg/hour or more. When the processing speed in flash drying is within these ranges, production efficiency is further improved. Also, the processing speed in flash drying is not particularly limited, but is preferably 30 kg/hour or less, more preferably 25 kg/hour or less, and even more preferably 20 kg/hour or less. When the processing speed in flash drying is within these ranges, the plate-like titanium phosphate having the moisture evaporated more sufficiently can be obtained. Examples of the preferred range of the processing speed in flash drying include, but are not limited to, 5 kg/hour or more and 30 kg/hour or less, 10 kg/hour or more and 25 kg/hour or less, 20 kg/hour or more and 25 kg/hour or less, and 10 kg/hour or more and 20 kg/hour or less.

The flash drying device used for flash drying is not particularly limited. Examples of commercially available products thereof include HIRAIWA turbojet dryer, an airflow dryer manufactured by Hiraiwa Iron Works Co. Ltd., and Flash Jet Dryer (such as FJD-4 or the like), a continuous instantaneous airflow dryer manufactured by Seishin Enterprise Co., Ltd.

Freeze drying refers to a drying means by which water-containing powder in a cake from, a slurry form or the like is exposed to a reduced pressure or vacuum environment to obtain a dispersed dry powder using the principle of sublimation.

Conditions for freeze drying are not particularly limited as long as the moisture in water-containing powder in a cake from, a slurry form or the like can be sufficiently removed to obtain a dispersed dry powder. The drying temperature in freeze drying is not particularly limited, but is preferably -70°C or more and 0°C or less. The pressure in freeze dying is not particularly limited, but is preferably more than 0 Pa and 100 Pa or less. The drying time in freeze drying is not particularly limited, but is preferably 2 hours or more and 72 hours or less.

The device used for freeze drying is not particularly limited as long as the moisture in water-containing powder in a cake from, a slurry form or the like can be sufficiently removed to obtain a dispersed dry powder. Examples of commercially available freeze drying devices include freeze drying devices, DFB-10 Series, manufactured by ULVAC, Inc.

[Heat treatment step]

The production method according to the above aspect of the present invention includes a heat treatment step of, after the precursor drying step, heat-treating (calcinating) plate-like titanium phosphate (plate-like titanium phosphate particles) above 700°C. If the heating temperature is 700°C or less, the production of titanium pyrophosphate will not proceed sufficiently.

The heat treatment method is not particularly limited, but includes, for example, a method in which heat treatment can be performed in air atmosphere.

The rate of temperature increase during the heat treatment is not particularly limited, but can be, for example, 1°C/min or more. Also, the rate of temperature increase during the heat treatment is not particularly limited, but can be, for example, 100°C/min or less. Examples of the preferred range of the rate of temperature increase during heat treatment include, but are not limited to, 1°C/min or more and 100°C/min or less.

The heating temperature (calcination temperature) during the heat treatment is not particularly limited as long as it is above 700°C, but examples thereof include 720°C or more, 740°C or more, above 750°C, 770°C or more, 775°C or more, 790°C or more, 800°C or more, 820°C or more, 825°C or more, 840°C or more, 870°C or more, 890°C or more, 925°C or more, and 950°C or more. When the heating temperature is within these ranges, the plate-like titanium pyrophosphate can be obtained more successfully. The plate-like titanium pyrophosphate which is better in the aspect ratio and the value of the above expression (1) can be also obtained. Also, the heating temperature (calcination temperature) during the heat treatment is not particularly limited as long as it is above 700°C, but examples thereof include 1000°C or less, below 975°C, 950°C or less, 925°C or less, 910°C or less, 900°C or less, 880°C or less, 860°C or less, 830°C or less, 825°C or less, 810°C or less, 800°C or less, 780°C or less, 775°C or less, 760°C or less, 730°C or less, and 710°C or less. If the temperature is too high, the shape of primary particles of the plate-like titanium pyrophosphate will be collapsed, so that it may be difficult to obtain plate-like titanium pyrophosphate good in shape. When the temperature is within these ranges, the plate-like titanium pyrophosphate which is better in the aspect ratio can be also obtained. Examples of the preferred range of the temperature at which the plate-like titanium phosphate is heat-treated in the heat treatment step (heating temperature, calcination temperature) include above 750°C and below 975°C. When the heating temperature is within this range, it is possible to produce titanium pyrophosphate more sufficiently; to inhibit the plate shape from collapsing and the sintering of particles from proceeding, and the like; and to produce the plate-like titanium pyrophosphate more sufficiently. Examples of the preferred range of the temperature at which the plate-like titanium phosphate is heat-treated in the heat treatment step (heating temperature, calcination temperature) include, but are not limited to, above 750°C and 950°C or less, above 750°C and 925°C or less, above 750°C and 825°C or less, above 750°C and 775°C or less, 775°C or more and below 975°C, 775°C or more and 950°C or less, 775°C or more and 925°C or less, 775°C or more and 825°C or less, 800°C or more and below 975°C, 800°C or more and 950°C or less, 800°C or more and 925°C or less, 800°C or more and 825°C or less, 825°C or more and below 975°C, 825°C or more and 950°C or less, 825°C or more and 925°C or less, 925°C or more and below 975°C, 925°C or more and 950°C or less, and 950°C or more and below 975°C.

The holding time during the heat treatment is not particularly limited, but is preferably 1 minute or more, more preferably 10 minutes or more, and even more preferably 100 minutes or more. When the holding time during the heat treatment is within these ranges, the plate-like titanium pyrophosphate can be obtained more successfully. The plate-like titanium pyrophosphate which is better in the aspect ratio and the value of the above expression (1) can be also obtained. Also, the holding time during the heat treatment is not particularly limited, but is preferably 1200 minutes or less, more preferably 600 minutes or less, and even more preferably 300 minutes or less. When the holding time during the heat treatment is within these ranges, the plate-like titanium pyrophosphate which is better in the value of the above expression (1) can be obtained. Production efficiency is also further improved. Examples of the preferred range of the holding time during the heat treatment include, but are not limited to, 1 minute or more and 1200 minutes or less, 10 minutes or more and 600 minutes or less, and 100 minutes or more and 300 minutes or less.

The heat treatment equipment used in the heat treatment is not particularly limited, and for example, a general-purpose calcination furnace can be used. Examples of commercially available products of the heat treatment equipment include an electric muffle furnace KM-420 manufactured by ADVAVTEC TOYO KAISHA, LTD. The plate-like titanium phosphate may be also heat-treated while being filled in a heat-resistant container. The heat-resistant container is not particularly limited, and examples thereof include a crucible. Examples of the crucible include a crucible made of alumina.

[Other steps]

The production method according to one embodiment of the present invention may further include other steps. However, the production method according to one embodiment of the present invention preferably does not include any disintegration step of disintegrating the plate-like titanium phosphate or a product (plate-like titanium pyrophosphate) obtained by the heat treatment step (that is, the production method according to one embodiment of the present invention preferably includes neither a disintegration step of disintegrating the plate-like titanium phosphate nor a disintegration step of disintegrating a product (plate-like titanium pyrophosphate) obtained by the heat treatment step). The above plate-like titanium pyrophosphate obtained by the production method according to one embodiment of the present invention satisfies the above expression (1) and has a narrow particle sizes distribution. Thereby, plate-like titanium pyrophosphate that has a high particle size distribution and is highly useful can be obtained even without disintegrating plate-like titanium phosphate which is a raw material, such as by pulverizing, and even without disintegrating coarse particles of a product (plate-like titanium pyrophosphate) obtained by heat treatment. In addition, since the production method according to one preferred embodiment of the present invention does not include any disintegration step, production efficiency is improved; the possibility of reduction in the aspect ratio due to unintended destruction of primary particles occurring in the disintegration step can be eliminated; and the possibility of broadening of the particle size distribution can be eliminated.

**Examples**

The present invention will be described in more detail with reference to the following Examples and Comparative Examples. However, the technical scope of the present invention is not limited only to the following Examples. Unless otherwise specified, the units "%" and "part (s)" mean "% by mass" and "part(s) by mass", respectively. Also, in the following Examples, unless otherwise specified, the operations were carried out under a condition of room temperature (25°C) .

<Production of particles>

[Example 1]

(Precursor production)

An aqueous solution of titanyl sulfate and an aqueous solution of phosphoric acid were mixed, at such a proportion that a ratio of the molar concentration of phosphorus [P] to the molar concentration of titanium [Ti], [P]/[Ti] is 10.2, to obtain a mixed solution. Next, this mixed solution was placed in a 200 L autoclave and heated at 110°C for 5 hours while stirring. After completion of heating, the mixed solution was allowed to cool to room temperature while stirring, and a slurry was then taken out from the autoclave. The solution in the slurry was subjected to replacement with pure water so as to prepare a slurry having a solid content of 10% by mass . Thereafter, the pH of the slurry was adjusted to 7 by adding dropwise ammonia water having a concentration of 29% by mass to the slurry while stirring to obtain a slurry of a titanium pyrophosphate precursor. The pH was measured using a pH meter (manufactured by HORIBA, Ltd., model number: F-51) .

For the obtained slurry of the titanium pyrophosphate precursor, the particle size D10 ($\mu$m) of secondary particles, at which the cumulative frequency from the smaller particle size side is 10% in a volume-based cumulative particle size distribution, the particle size D50 ($\mu$m) of secondary particles, at which the cumulative frequency from the smaller particle size side is 50% in a volume-based cumulative particle size distribution, and the particle size D90 ($\mu$m) of secondary particles, at which the cumulative frequency from the smaller particle size side is 90% in a volume-based cumulative particle size distribution, was measured using a particle size distribution measurement device LA-950 (manufactured by HORIBA, Ltd.). The particle size D50 of secondary particles was 1.34 $\mu$m.

Subsequently, (the particle size D90 of secondary particles - the particle size D10 of secondary particles) /the particle size D50 of secondary particles was calculated from the particle size D10 ($\mu$m) of secondary particles, the particle size D50 ($\mu$m) of secondary particles and the particle size D90 ($\mu$m) of secondary particles, as measured above, and the calculated value thereof was 1.22.

For the titanium pyrophosphate precursor slurry, the particle size D10 ($\mu$m) of secondary particles, the particle size D50 ($\mu$m) of secondary particles and the particle size D90 ($\mu$m) of secondary particles were evaluated by the evaluation methods described later, respectively.

Further, as results of X-ray diffraction measurement and scanning electron microscope (SEM) observation, which will be described later, and the particles contained in the titanium pyrophosphate precursor slurry were confirmed to be plate-like titanium phosphate, which was a titanium pyrophosphate precursor. It was confirmed from this that the values of the particle size D10 ($\mu$m) of secondary particles, the particle size D50 ($\mu$m) of secondary particles and the particle size D90 ($\mu$m) of secondary particles, each of which was obtained by subjecting the titanium pyrophosphate precursor slurry to measurement with a particle size distribution measurement device LA-950 (manufactured by HORIBA, Ltd.) were values for the plate-like titanium phosphate, which was a titanium pyrophosphate precursor.

In addition, the obtained titanium pyrophosphate precursor slurry was heated at 105°C for 24 hours to obtain a titanium pyrophosphate precursor powder. The powder was analyzed with X-ray diffraction (XRD) measurement, and it was thereby confirmed that the particles constituting the powder were crystalline titanium phosphate having a structural formula of $Ti(HPO_4)_2 \cdot H_2O$.

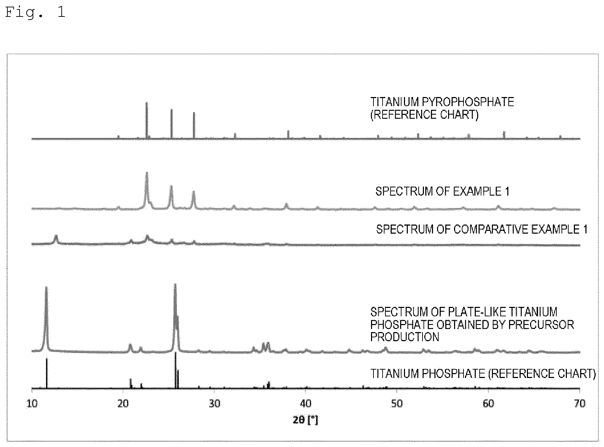

The XRD measurement was performed using the same device and conditions as those used for the evaluation of the presence or absence of production of titanium pyrophosphate for the particles of the Examples and Comparative Examples, which will be described later. The XRD spectrum measured for the obtained titanium pyrophosphate precursor is shown in Figure 1.

Then, the obtained titanium pyrophosphate precursor slurry was heated at 105°C for 24 hours to obtain a titanium pyrophosphate precursor (titanium phosphate) powder. The obtained powder was observed with a scanning electron microscope (SEM) (SU8000, Hitachi High-Tech Corporation), and the shape of the particles constituting the powder (the shape of the primary particles) was plate-like. As a result of analysis using an imaging analysis software "Mac-View ver.4" manufactured by Mountech Co., Ltd., the in-plane length $D_{PL}50$ ($\mu$m) of primary particles in a volume-based cumulative particle size distribution was 1.11 $\mu$m, the thickness $D_{PT}50$ ($\mu$m) of primary particles in a volume-based cumulative particle size distribution was 0.143 $\mu$m, and the aspect ratio expressed by the ratio of the in-plane length $D_{PL}50$ of primary particles ($\mu$m) to the thickness $D_{PT}50$ ($\mu$m) of primary particles (the in-plane length $D_{PL}50$ ($\mu$m) of primary particles/the thickness $D_{PT}50$ of primary particles of plate-like particles) was 8.

For the obtained titanium pyrophosphate precursor (titanium phosphate), each of the particle shape, the in-plane length $D_{PL}50$ ($\mu$m) of primary particles in a volume-based cumulative particle size distribution, the thickness $D_{PT}50$ of primary particles of plate-like particles in a volume-based cumulative particle size distribution and the aspect ratio was evaluated by the evaluation methods described later.

It was confirmed from these results that the titanium pyrophosphate precursor slurry obtained above was a plate-like titanium phosphate slurry, that is, a slurry containing plate-like titanium phosphate.

(Drying treatment of precursor)

Flash drying was performed by feeding the titanium pyrophosphate precursor slurry (plate-like titanium phosphate slurry) obtained above at a rate of 20 kg/hour into a flowing air heated to 250°C and having an air velocity of 10 m$^3$/min by using Flash Jet Dryer FJD-4, a continuous instantaneous airflow dryer (manufactured by Seishin Enterprise Co., Ltd.), to obtain plate-like titanium phosphate after subjected to drying treatment (powder).

(Heat treatment (calcination))

The plate-like titanium phosphate after subjected to drying treatment was filled in a crucible made of alumina, and the temperature was increased at a rate of temperature increase of 10°C/min and held for 180 minutes after the temperature reached 800°C by using an electric muffle furnace KM-420 (manufactured by ADVAVTEC TOYO KAISHA, LTD), followed by cooling naturally to room temperature to obtain particles (powder) of Example 1.

[Examples 2 to 5]

Each of particles (powder) of Examples 2 to 5 were obtained in the same manner as in Example 1, except that the temperature that was reached during the heat treatment was changed as shown in Table 1 below.

[Comparative Example 1]

Particles (powder) of Comparative Example 1 were obtained in the same manner as in Example 1, except that the temperature that was reached during the heat treatment was changed from 800°C to 700°C.

(Comparative Example 2)

Particles (powder) of Comparative Example 2 were obtained in the same manner as in Example 1, except that the method for drying treatment of a precursor was changed from flash drying to rack drying described below.

(Drying treatment of precursor by rack drying)

A vat filled with the titanium pyrophosphate precursor slurry (plate-like titanium phosphate slurry) obtained in the above precursor production was placed in a blower-type incubator LC-124 (manufactured by ESPEC CORP.). By leaving it to stand at 105°C for 24 hours, rack drying was performed to obtain plate-like titanium phosphate after subjected to drying treatment (powder).

In the production of particles of the Examples and Comparative Examples, it was confirmed, by the same method as that for the evaluation of the presence or absence of production of titanium pyrophosphate, which will be described later, that titanium pyrophosphate crystals were not produced as a result of drying treatment of the precursor.

[Confirmation of aggregation of precursor caused by drying treatment]

The plate-like titanium phosphate slurry obtained in the above precursor production was subjected to drying treatment in the same manner as in each of the Examples and Comparative Examples to provide plate-like titanium phosphate after subjected to drying treatment. Then, 450 g of pure water was weighed into a sealed container (500 mL wide-mouth I-Boy, manufactured by AS ONE CORPORATION), and 50 g of the provided plate-like titanium phosphate after subjected to drying treatment was added thereto. Subsequently, the sealed container was closed with the lid and shaken manually several times. After confirming that no sediment has deposited on the bottom of the container, the content of the sealed container was subjected to suction filtration treatment with a nylon mesh (NY20-HC, manufactured by Tanaka Sanjiro Co., Ltd.). Regarding the results, if no cake was deposited and the filtration was completed within 1 minute, it was determined that the drying means in the drying treatment was a means capable of drying while suppressing aggregation. In contrast, if the filtration takes 1 minute or more, if any cake was deposited, or if the mesh was clogged in the middle of the filtration, it was determined that the drying means in the drying treatment was not a means capable of drying while suppressing aggregation.

In addition, when performing this confirmation, the titanium pyrophosphate precursor slurry (plate-like phosphoric acid slurry) before drying treatment was subjected to the same operation as the confirmation of aggregation of the precursor by the above drying treatment, and it was confirmed that filtration can be performed with depositing no cake within 1 minute.

As a result of this confirmation, it was confirmed that the flash drying in Examples 1 to 5 and Comparative Example 1 was a means capable of drying while suppressing aggregation, while the rack drying in Comparative Example 2 was a means incapable of drying while suppressing aggregation.

<Evaluation of particles>

[Presence or absence of production of titanium pyrophosphate]

The particles of the Examples and Comparative Examples obtained above were subjected to X-ray diffraction (XRD) measurement under the following conditions:

<<XRD measurement conditions>>

Device name: Horizontal sample-type multi-purpose X-ray diffractometer Ultima IV (manufactured by Rigaku Corporation)
Tube: Cu
Tube voltage: 20 kV
Tube current: 10 mA
Divergence slit: 1.0°
Scattering slit: 2.0°
Light receiving slit: 0.15 mm
Step width: 0.01°/step.

In comparing the reference data for titanium pyrophosphate crystals (JCPSD No. 00-038-1468) with the spectral data obtained by XRD measurement, when, similar to the first to third highest intensity peaks seen in the reference data for titanium pyrophosphate crystals, the peak with the first highest intensity in the spectral data obtained by XRD measurement is in the vicinity of the diffraction angle $2\theta = 22.5°$; the peak with the second highest intensity in the spectral data obtained by XRD measurement is in the vicinity of the diffraction angle $2\theta = 25.3°$; and the peak with the third highest intensity in the spectral data obtained from the XRD measurement is in the vicinity of the diffraction angle $2\theta = 27.7°$, respectively, it was determined that titanium pyrophosphate $TiP_2O_7$ was the main phase and that titanium pyrophosphate crystals were produced. That is, the particles were determined to be titanium pyrophosphate.

On the other hand, when unlike the reference data for titanium pyrophosphate crystals, the peak with the first highest intensity in the spectral data obtained by XRD measurement is at a position other than the vicinity of the diffraction angle $2\theta = 22.5°$; the peak with the second highest intensity in the spectral data obtained by XRD measurement is at a position other than the vicinity of the diffraction angle $2\theta = 25.3°$; and/or the peak with the third highest intensity in the spectral data obtained by XRD measurement is at a position other than the vicinity of the diffraction angle $2\theta = 27.7°$, it was determined that no titanium pyrophosphate crystals were produced. That is, the particles were determined not to be titanium pyrophosphate.

The spectrum of the particles of Example 1, the spectrum of the particles of Comparative Example 1 and spectrum of the titanium pyrophosphate precursor (plate-like titanium phosphate) obtained by the precursor production in the Examples and the Comparative Examples, reference data for titanium pyrophosphate crystals (reference chart), and reference data for titanium phosphate crystals (reference chart) in the XRD measurement are shown in Figure 1.

[Characteristics of particles]

(Particle shape)

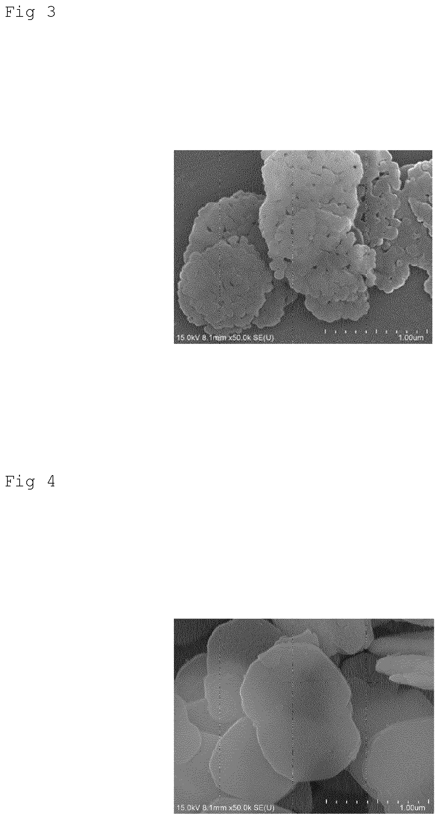

The titanium pyrophosphate precursor slurry (plate-like titanium phosphate slurry) obtained in the above precursor production was heated at 105°C for 24 hours to provide plate-like titanium phosphate particles (powder).
Then, the particles of the Examples and Comparative examples obtained above and the plate-like titanium phosphate particles obtained above were each subjected to random measurement with a scanning electron microscope (SEM) (SU8000, manufactured by Hitachi High-Tech Corporation, at magnifying power by which 10 or more particles can be confirmed in one field of view). The obtained SEM image were visually confirmed to determine the particle shape (the shape of primary particles).
In addition, the SEM images obtained above were visually confirmed to determine the presence or absence of the unevenness in the particle surface (the surfaces of primary particles).
A SEM image of the particles of Example 1 by which the state of unevenness on the surfaces (the presence or absence of unevenness) can be confirmed is shown in Figure 3, and a SEM image of the particles of Comparative Example 1 by which the state of unevenness on the surfaces (the presence or absence of unevenness) can be confirmed is shown in Figure 4, respectively.

(In-plane length $D_{PL}50$ of primary particles, thickness $D_{PT}50$ of primary particles and aspect ratio)

The titanium pyrophosphate precursor slurry (plate-like titanium phosphate slurry) obtained in the above precursor production was heated at 105°C for 24 hours to provide plate-like titanium phosphate particles (powder).
Then, each of the particles of the Examples and Comparative Examples as obtained above, and the particles of the plate-like titanium phosphate as obtained above were subjected to random measurement with a scanning electron microscope (SEM). Next, for the obtained SEM image, 100 or more and 200 or less primary particles (plate-like primary particles) were subjected to measurement with an imaging analysis software "Mac-View ver.4" manufactured by Mountech Co., Ltd. to determine the in-plane long diameter ($\mu$m), the in-plane short diameter ($\mu$m), and the thickness ($\mu$m) of each primary particle. The in-plane long diameter ($\mu$m) of each individual primary particle was defined as a length of the long side of the quadrangle having the longest side among the quadrangles (rectangles or squares) circumscribing the primary particle. The in-plane short diameter ($\mu$m) of each individual primary particle is defined as a length of the short side of the quadrangle having the longest side among the quadrangles circumscribing the primary particle. When the quadrangle circumscribing the primary particle was a square, the length of one side was defined as a length of both the long side and the short side. The quadrangle having the longest side was a quadrangle in which the length of one side (long side) was longest, among the quadrangles determined by calculating the quadrangle circumscribing the selected primary particle at each rotation angle with rotation of 360°. When the in-plane long diameter ($\mu$m) and the in-plane short diameter ($\mu$m) of each individual primary particle were determined, the quadrangle circumscribing the primary particle was a quadrangle circumscribing the plate surface of the primary particle. For the in-plane long diameter ($\mu$m) of each individual primary particle, the value at which the cumulative frequency from the smaller particle size side was 50% in a volume-based cumulative particle size distribution was defined as an in-plane length $D_{PL}50$ ($\mu$m) of primary particles. For the thickness ($\mu$m) of each individual primary particle, the value at which the cumulative frequency from the smaller particle size side was 50% in a volume-based cumulative particle size distribution was defined as a thickness $D_{PT}50$ ($\mu$m) of primary particles.
Then, from the in-plane length $D_{PL}50$ ($\mu$m) of primary particles and the thickness $D_{PT}50$ ($\mu$m) of primary particles calculated above, the aspect ratio expressed by the ratio of the in-plane length $D_{PL}50$ ($\mu$m) of primary particles to the thickness $D_{PT}50$ ($\mu$m) of primary particles (the in-plane length $D_{PL}50$ ($\mu$m) of primary particles/the thickness $D_{PT}50$ ($\mu$m) of primary particles of plate-like particles) was calculated. It was determined that when the aspect ratio was 5 or more, the usefulness of plate-like particles was sufficiently expressed.

(Particle size D10 of secondary particles, particle size D50 of secondary particles and particle size D90 of secondary particles, and particle size distribution)

The particles (powder) of the Examples and Comparative Examples obtained above, and the titanium pyrophosphate precursor slurry (plate-like titanium phosphate slurry) obtained in the above precursor production were subjected to measurement with a particle size distribution measurement device LA-950 (manufactured by HORIBA, Ltd.) using pure water as a dispersing medium under the conditions of a dispersing medium refractive index of 1.33, a particle refractive index of 1.70, and a particle absorptivity of 0. From the particle size frequency of each individual particle, each of the particle size D10 ($\mu$m) of secondary particles, at which the cumulative frequency from the smaller particle size side is 10% in a volume-based cumulative particle size distribution, the particle size D50 ($\mu$m) of secondary particles,

at which the cumulative frequency from the smaller particle size side is 50% in a volume-based cumulative particle size distribution, and the particle size D90 (μm) of secondary particles, at which the cumulative frequency from the smaller particle size side is 90% in a volume-based cumulative particle size distribution, was calculated.

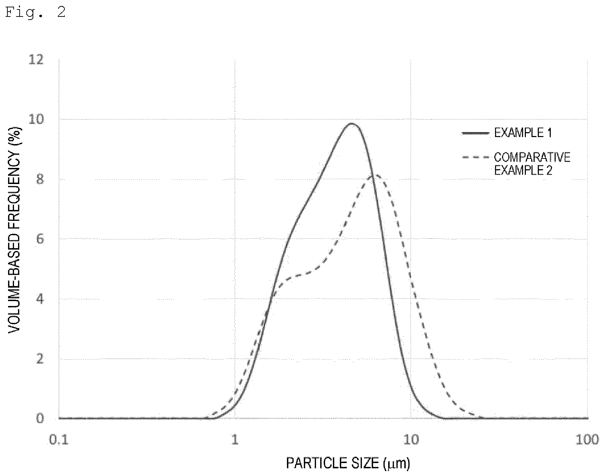

Subsequently, (the particle size D90 of secondary particles - the particle size D10 of secondary particles) /the particle size D50 of secondary particles was calculated from the particle size D10 (μm)of secondary particles, the particle size D50 (μm) of secondary particles and the particle size D90 (μm) of secondary particles calculated above to obtain a calculated value. The smaller calculated value represents the narrower particle size distribution. If this calculated value was 1.65 or less, it was determined that the narrow particle size distribution was sufficiently narrow. The measurement results for the particle size distribution of the particles of Example 1 and the particles of Comparative Example 2 are shown in Figure 2.

(Product of specific surface area S and in-plane length $D_{PL}50$ of primary particles)

For the particles of the Examples and Comparative Examples obtained above, the specific surface area S (m²/g) × the in-plane length $D_{PL}50$ (μm) of primary particles was calculated from the specific surface area S (m²/g) and the in-plane length $D_{PL}50$ (μm) of primary particles calculated above to obtain a calculated value (μm·π·/g).

The specific surface area, S was measured by the BET specific surface area method using a fully automatic specific surface area analyzer Macsorb (registered trademark) HM Model-1200 Series manufactured by Mountech Co., Ltd. More specifically, the particles were charged into a glass tube and subjected to degassing treatment at 180°C for 10 minutes. The degassing treatment was performed while flowing nitrogen gas through the glass tube. Next, the glass tube containing the degassed particles was immersed in liquid nitrogen to perform adsorption treatment of nitrogen, and then allowed to be open to the atmosphere to desorb the adsorbed nitrogen. Subsequently, a mixed gas (30% by volume of nitrogen gas and 70% by volume of helium) was flowed through the glass tube, and a change in thermal conductivity due to a change in the concentration of the mixed gas was detected. The amount of adsorbed nitrogen was calculated from the change in thermal conductivity, and the surface area of the particles was calculated from the amount of adsorbed nitrogen. Then, the surface area of the particles obtained was divided by the mass of the charged particles to obtain the value of the specific surface area S (m²/g). The conditions for each gas in measuring the specific surface area S are shown below:

Nitrogen pressure: 0.3 MPa
Mixed gas pressure: 0.15 MPa
Nitrogen flow rate: 25 mL/min
Mixed gas flow rate: 25 mL/min.

The evaluation results of the particles are summarized in Table 1 below.

[Table 1]

(Table 1) Conditions for producing particles and characteristics of particles

| | Drying process | Heat treatment (calcination) temperature [°C] | Presence or absence of production of titanium pyrophosphate | Primary particles | | | | | Secondary particles | | | | Calculated value of specific surface area S x in-plane length $D_{PL}50$ of primary particles [$\mu$m·m$^2$/g] |
| | | | | Particle shape | Presence or absence of unevenness shape in surface | In-plane length $D_{PL}50$ [$\mu$m] | Thickness $D_{PT}50$ [$\mu$m] | Aspect ratio | D10 [$\mu$m] | D50 [$\mu$m] | D90 [$\mu$m] | Calculated value of (D90 - D10)/D50 | |
|---|---|---|---|---|---|---|---|---|---|---|---|---|---|
| Example 1 | Flowing air | 800 | Present | Plate -like | Present | 1.38 | 0.16 | 8.61 | 1.64 | 3.49 | 6.43 | 1.37 | 17.33 |
| Example 2 | Flowing air | 775 | Present | Plate -like | Present | 1.28 | 0.16 | 8.06 | 1.40 | 2.80 | 5.96 | 1.63 | 24.38 |
| Example 3 | Flowing air | 825 | Present | Plate -like | Absent | 1.26 | 0.14 | 8.77 | 1.46 | 2.99 | 6.16 | 1.58 | 12.36 |
| Example 4 | Flowing air | 925 | Present | Plate -like | Absent | 1.37 | 0.16 | 8.48 | 1.51 | 3.08 | 5.89 | 1.42 | 10.34 |
| Example 5 | Flowing air | 950 | Present | Plate -like | Absent | 1.33 | 0.21 | 6.25 | 1.47 | 3.09 | 6.12 | 1.50 | 9.22 |
| **Comparative** Example 1 | Flowing air | 700 | Absent | Plate -like | Absent | 1.39 | 0.16 | 8.78 | 1.42 | 2.93 | 6.24 | 1.64 | 13.46 |
| **Comparative** Example 2 | Rack | 800 | Present | Plate -like | Present | 1.21 | 0.16 | 7.37 | 1.55 | 4.37 | 9.31 | 1.78 | 16.31 |

From the results in Table 1 above, it was confirmed that the particles of Example 1 were plate-like crystalline titanium pyrophosphate. In addition, it was confirmed that the particles of Example 1 had an aspect ratio of 5 or more; the calculated value of (D90 of secondary particles - the particle size D10 of secondary particles) /the particle size D50 of secondary particles was 1.65 or less (that is, the relationship among the particle size D10 of secondary particles, the particle size D50 of secondary particles and the particle size D90 of secondary particles was expressed by the above expression (1)), and the particle size distribution was therefore narrow. Such particles are presumed to be highly useful. In addition, from the results in Table 1 above, it was confirmed that the particles of Examples 2 to 5 were also plate-like crystalline titanium pyrophosphate. Further, it was confirmed that the particles of Examples 2 to 5 had an aspect ratio of 5 or more; the calculated value of (D90 of secondary particles - the particle size D10 of secondary particles) /the particle size D50 of secondary particles was 1.65 or less (that is, the relationship among the particle size D10 of secondary particles, the particle size D50 of secondary particles and the particle size D90 of secondary particles was expressed by the above expression (1)), and the particle size distribution was therefore narrow. Such particles are presumed to be highly useful.

In contrast, the particles of Comparative Example 1 were confirmed not to be titanium pyrophosphate. In addition, it was confirmed that the particles of Comparative Example 2 were plate-like crystalline titanium pyrophosphate, but the calculated value of (D90 of secondary particles - the particle size D10 of secondary particles) /the particle size D50 of secondary particles was more than 1.65 and did not satisfy the relationship expressed by the above expression (1) ; and the particle size distribution was therefore wide.

(Static coefficient of friction)

The particles of Examples 4 and 5 obtained above were subjected to a reciprocating sliding test with a multifunctional friction measuring machine, i-tester TL-201 manufactured by Trinity-Lab. Inc. to measure a static coefficient of friction of the particles. More specifically, the static coefficient of friction of particles was evaluated as follows. The particles were mixed with pure water to obtain a slurry having a particle concentration of 5% by mass . Next, using a stainless steel plate (manufactured by KENIS LIMITED, Model number: B-26) as a friction substrate, and a φ10 mm ball of SUS304 (manufactured by Shinto Scientific Co., Ltd., φ10 mm, Model number: SUS304) as a slider on the testing machine side, 1 mL of the slurry obtained above was dropped between the substrate and the slider to perform evaluation. The conditions for the reciprocating sliding test are shown below:

Sliding width: 70 mm
Sliding speed: 66.7 mm/sec
Load: 10 g
Evaluation time: 1 minute
Number of sliding operations: 60
Evaluation number N: 5

The static friction force value (the maximum value of the friction force obtained immediately after the start of sliding) obtained by one sliding was read out with an analysis software (Tribo Analysis Soft), and the average of 60 sliding (that is, 30 reciprocations) was taken as a static friction force. The static coefficient of friction was calculated by dividing the obtained static friction force by the gravity generated by the load.

Table 2 below shows the evaluation results of the static coefficient of friction of each of the particles as well as the evaluation results of the aspect ratio of primary particles obtained above.

[Table 2]

| (Table 2) Aspect ratio of primary particles and static coefficient of friction | | |
|---|---|---|
| | Example 4 | Example 5 |
| Aspect ratio of primary particles | 8.48 | 6.25 |
| Static coefficient of friction | 0.69 | 0.76 |

From the results in Table 2 above, it was confirmed that the plate-like titanium pyrophosphate of Example 4, which had a higher aspect ratio, had a static coefficient of friction smaller than the plate-like titanium pyrophosphate of Example 5, which had a lower aspect ratio.

(Adsorption amount of methylene blue per 1 g of particles)

The adsorption amount of methylene blue per 1 g of particles was confirmed for the particles of Examples 2 and 4 obtained above. More specifically, the adsorption amount of methylene blue on particles was evaluated as follows. Adsorption treatment at room temperature for 24 hours was performed by immersing 0.5 g of the particles in 15 mL of an aqueous solution of methylene blue (the concentration: 0.025 g/100 mL). After the adsorption treatment, filtration was performed and the amount of methylene blue remaining in a filtrate was measured. Then, the adsorption amount (mg) of methylene blue per 1 g of particles was calculated from the calculated value of the difference between the amount of methylene blue in the original aqueous solution of methylene blue and the amount of methylene blue remaining in the filtrate (the content of methylene blue in the original aqueous solution of methylene blue - the amount of methylene blue remaining in the filtrate). The amount of methylene blue in the original aqueous solution of methylene blue and the amount of methylene blue remaining in the filtrate were determined using a calibration curve showing the relationship between the concentration of methylene blue in the aqueous solution of methylene blue and the absorbance of the aqueous solution of methylene blue at that concentration.

The absorbance of the aqueous solution of methylene blue was measured by double beam photometry using an ultraviolet-visible spectrophotometer UV-2450 manufactured by SHIMADZU CORPORATION. More specifically, the aqueous solution of methylene blue to be measured was charged into a glass cell so as to fill about 80% of the glass cell, and then the glass cell containing the aqueous solution of methylene blue was set in the device to measure the absorbance. The conditions for absorbance measurement are shown below:

Measurement wavelength: 900 to 190 nm
Scanning speed: medium
Sampling pitch: 0.5 nm
Slit width: 0.2 nm
Light source switching wavelength: 360 nm.

The area under the spectrum from 540 nm to 720 nm in the obtained graph was analyzed by a software (UV Prove manufactured by SHIMADZU CORPORATION), and the obtained value was taken as the absorbance.

The adsorption amount of methylene blue (mg) per 1 g of particles for each of the particles, as well as the evaluation results of the presence or absence of an unevenness shape in the surfaces of primary particles obtained above and the calculated value of specific surface area S × the in-plane length $D_{PL}50$ of primary particles obtained above are shown in Table 3 below.

[Table 3]

| (Table 3) Presence or absence of unevenness shape in surfaces of primary particles, calculated value of calculated value of specific surface area S × in-plane length $D_{PL}50$ of primary particles and adsorption amount of methylene blue | | |
|---|---|---|
| | Example 2 | Example 4 |
| Presence or absence of unevenness shape in surfaces of primary particles | Present | Absent |
| Calculated value of specific surface area S × in-plane length $D_{PL}50$ of primary particles [$\mu m \cdot m^2/g$] | 24.38 | 10.34 |
| Adsorption amount of methylene blue (mg) per 1 g of particles | 11.0 | 4.4 |

From the results of Table 3 above, it was confirmed that the plate-like titanium pyrophosphate of Example 2, which had an unevenness shape in the surfaces of primary particles and was larger in the calculated value of specific surface area S × the in-plane length $D_{PL}50$ of primary particles, was larger in the adsorption amount of methylene blue, compared with the plate-like titanium pyrophosphate of Example 4, which had no unevenness shape in the surfaces of primary particles and was smaller in the calculated value of specific surface area S × the in-plane length $D_{PL}50$ of primary particles.

The present application is based on Japanese Patent Application No. 2021-060929 filed on March 31, 2021, the disclosure content of which is incorporated by reference in its entirety.

**Claims**

1. Plate-like titanium pyrophosphate having an aspect ratio of 5 or more expressed as a ratio of the in-plane length $D_{PL}50$ of primary particles, at which the cumulative frequency from the smaller particle size side is 50% in a volume-based cumulative particle size distribution, to the thickness $D_{PT}50$ of primary particles, at which the cumulative frequency from the smaller particle size side is 50% in a volume-based cumulative particle size distribution (the in-plane length $D_{PL}50$ of primary particles/the thickness $D_{PT}50$ of primary particles),

   wherein the relationship among the particle size D10 of secondary particles, at which the cumulative frequency from the smaller particle size side is 10% in a volume-based cumulative particle size distribution, the particle size D50 of secondary particles, at which the cumulative frequency from the smaller particle size side is 50% in a volume-based cumulative particle size distribution, and the particle size D90 of secondary particles, at which the cumulative frequency from the smaller particle size side is 90% in a volume-based cumulative particle size distribution, is expressed by the following expression (1).
   [Expression 1]

   $$\text{(Particle size D90 of secondary particles} - \text{Particle size D10 of secondary particles)/Particle size D50 of secondary particles} \leq 1.65. \tag{1}$$

2. The plate-like titanium pyrophosphate according to claim 1, having an unevenness shape in the surface.

3. The plate-like titanium pyrophosphate according to claim 1 or 2, wherein the relationship between the specific surface area S and the in-plane length $D_{PL}50$ of primary particles is expressed by the following expression (2).
   [Expression 2]

   $$\text{Specific surface area S } (m^2/g) \times \text{In-plane length } D_{PL}50 \ (\mu m) \text{ of primary particles} \geq 9 \ (\mu m \cdot m^2/g) \tag{2}$$

4. A method for producing plate-like titanium pyrophosphate, comprising:

   a precursor production step of producing plate-like titanium phosphate, which is a precursor, by hydrothermal synthesis;
   a precursor drying step of drying the plate-like titanium phosphate by a means capable of drying while suppressing aggregation; and
   a heat treatment step of, after the precursor drying step, heat-treating the plate-like titanium phosphate above 700°C.

5. The method for producing plate-like titanium pyrophosphate according to claim 4, wherein, in the heat treatment step, the plate-like titanium phosphate is heat-treated above 750°C and below 975°C.

6. The method for producing plate-like titanium pyrophosphate according to claim 4 or 5, wherein the means capable of drying while suppressing aggregation is flash drying or freeze drying.

7. The method for producing plate-like titanium pyrophosphate according to any one of claims 4 to 6, wherein, in the plate-like titanium phosphate, the in-plane length $D_{PL}50$ of primary particles, at which the cumulative frequency from the smaller particle size side is 50% in a volume-based cumulative particle size distribution, is 0.1 $\mu$m or more and 15 $\mu$m or less.

8. The method for producing plate-like titanium pyrophosphate according to any one of claims 4 to 7, which comprises neither a disintegration step of disintegrating the plate-like titanium phosphate nor a disintegration step of disintegrating a product obtained by the heat treatment step.

Fig. 1

TITANIUM PYROPHOSPHATE
(REFERENCE CHART)

SPECTRUM OF EXAMPLE 1

SPECTRUM OF COMPARATIVE EXAMPLE 1

SPECTRUM OF PLATE-LIKE TITANIUM
PHOSPHATE OBTAINED BY PRECURSOR
PRODUCTION

TITANIUM PHOSPHATE (REFERENCE CHART)

10    20    30    40    50    60    70

2θ [°]

Fig. 2

Fig 3

Fig 4

## INTERNATIONAL SEARCH REPORT

| | International application No. |
|---|---|
| | **PCT/JP2022/013146** |

### A. CLASSIFICATION OF SUBJECT MATTER

**C01B 25/42**(2006.01)i
FI:   C01B25/42

According to International Patent Classification (IPC) or to both national classification and IPC

### B. FIELDS SEARCHED

Minimum documentation searched (classification system followed by classification symbols)

C01B25/42

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580 (JDreamIII);   JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2020-55735 A (NIPPON CHEMICAL IND) 09 April 2020 (2020-04-09) abstract, paragraphs [0003], [0007]-[0020], [0035]-[0064], [0080]-[0087] | 1-8 |
| A | JP 2000-7311 A (TAYCA CORP) 11 January 2000 (2000-01-11) paragraph [0002] | 1-8 |
| A | JP 1-119507 A (RASA KOGYO KK) 11 May 1989 (1989-05-11) claims | 1-8 |
| A | US 5733519 A (MONSANTO COMPANY) 31 March 1998 (1998-03-31) entire text | 1-8 |
| A | WO 2018/180797 A1 (FUJIMI INC) 04 October 2018 (2018-10-04) entire text | 1-8 |
| A | JP 2016-503561 A (LG CHEM, LTD) 04 February 2016 (2016-02-04) entire text | 1-8 |
| A | JP 2020-516568 A (CHEMISCHE FABRIK BUDENHEIM KG) 11 June 2020 (2020-06-11) entire text | 1-8 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 May 2022** | **24 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

28

**INTERNATIONAL SEARCH REPORT**

International application No.

**PCT/JP2022/013146**

**C.     DOCUMENTS CONSIDERED TO BE RELEVANT**

| Category* | Citation of document, with indication, where appropriate, of the relevant passages | Relevant to claim No. |
|---|---|---|
| A | JP 2012-180229 A (TAIHEI CHEMICAL INDUSTRIAL CO LTD) 20 September 2012 (2012-09-20)<br>entire text | 1-8 |

Form PCT/ISA/210 (second sheet) (January 2015)

INTERNATIONAL SEARCH REPORT
Information on patent family members

International application No.

**PCT/JP2022/013146**

| Patent document cited in search report | | | Publication date (day/month/year) | Patent family member(s) | | | Publication date (day/month/year) |
|---|---|---|---|---|---|---|---|
| JP | 2020-55735 | A | 09 April 2020 | (Family: none) | | | |
| JP | 2000-7311 | A | 11 January 2000 | (Family: none) | | | |
| JP | 1-119507 | A | 11 May 1989 | KR | 10-1989-0008158 | A | |
| | | | | claims | | | |
| US | 5733519 | A | 31 March 1998 | US | 006114427 | A1 | |
| | | | | entire text | | | |
| WO | 2018/180797 | A1 | 04 October 2018 | US | 2020-0377369 | A1 | |
| | | | | entire text | | | |
| | | | | EP | 003604218 | A1 | |
| | | | | entire text | | | |
| | | | | KR | 10-2019-0113990 | A | |
| | | | | CN | 110461765 | A | |
| JP | 2016-503561 | A | 04 February 2016 | US | 2015-0072238 | A1 | |
| | | | | entire text | | | |
| | | | | EP | 002874211 | A1 | |
| | | | | entire text | | | |
| | | | | CN | 104662717 | A | |
| | | | | KR | 10-2015-0027727 | A | |
| JP | 2020-516568 | A | 11 June 2020 | US | 2020-0103565 | A1 | |
| | | | | entire text | | | |
| | | | | EP | 003601423 | A1 | |
| | | | | entire text | | | |
| | | | | CN | 110475815 | A | |
| | | | | KR | 10-2019-0135476 | A | |
| JP | 2012-180229 | A | 20 September 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1119507 A
- JP 2000007311 A
- WO 2018180797 A
- JP 2021060929 A